# EUROPEAN PATENT SPECIFICATION

(11) **EP 2 365 598 B1**
(45) Date of publication and mention of the grant of the patent: **19.04.2017**
(21) Application number: 10002091.6
(22) Date of filing: 02.03.2010
(51) Int. Cl.: H02J 1/10

(54) **System for supplying electrical energy from multiple sources to a load**
System zur Versorgung elektrischer Energie aus mehreren Quellen zu einer Last
Systéme d'alimentation d'énergie électrique de sources multiples pour une charge

(43) Date of publication of application: 14.09.2011
(73) Proprietor: Sottocorno, Silvio, 20060 Trezzano Rosa (MI) (IT)
(72) Inventor: Sottocorno, Silvio, 20060 Trezzano Rosa (MI) (IT)
(74) Representative: Gatti, Enrico

(56) References cited:
- EP-A1- 1 592 106
- EP-A2- 1 107 437
- EP-A2- 1 710 890
- WO-A1-2007/004514
- DE-A1- 3 641 059
- DE-A1- 4 128 962
- JP-A- H05 108 176
- US-A1- 2006 092 588

## Description

The present invention relates to a system for supplying electrical energy in the form of alternating current to a load. Systems are known using renewable energy, for example solar or wind, for powering residential electrical installations.

The utilization of renewable energy is however rendered traditionally problematic by the fact that such energy is available only during certain periods. For example, solar energy is present only during the hours of sunlight, the problem hence arising of making this energy also available during the night and hence when the renewable energy cannot or only insufficiently be supplied.

The expression "renewable energy sources" means all energy sources which are not fossil: solar, wind, hydraulic, geothermal, wave motion, sea movement (tides and currents), and biomass.

The most obvious solution to this problem is to provide an energy accumulator.

Energy accumulators are however complicated and onerous, and make renewable energy utilization very costly, particularly at domestic level, compared with the cost of traditionally available mains electrical energy.

Plants are known for producing electrical energy from renewable sources which, when this energy is lacking or is reduced, uses mains electrical energy in combination therewith.

WO 2007/004514 A1 discloses the preamble of claim 1.

An object of the present invention is to provide a system for supplying electrical energy to a load by suitably combining several electrical energy sources, at least one of an alternating current generator and one of a photovoltaic panel.

Another object is to provide a system which is of simple construction and of low installation and operating costs.

These and other objects are attained according to the present invention by a system for supplying electrical energy to a load according to claim 1.

By virtue of the present system, both the energy produced by a photovoltaic panel and an alternating current generator can be mixed, as can energy produced by a photovoltaic panel, an alternating current generator and several renewable sources.

If used together with renewable sources, even if the operating conditions are not optimal and hence the energy produced is insufficient to power the user, this is mixed with other solar energy with constant supply characteristics, even withdrawn from storage batteries.

The user is normally powered by the energy of lowest cost and/or of lesser environmental impact, but when such is not available, a part or all can be withdrawn from the electricity mains.

The characteristics and advantages of the present invention will be apparent from the following detailed description of a practical embodiment thereof, illustrated by way of non-limiting example in the accompanying drawings, in which:
Figure 1 shows schematically a system for supplying A.C. electrical energy to a load, in accordance with the present invention;
Figure 2 shows schematically a number of mixers connected in parallel to connect several secondary sources together, in accordance with the present invention;

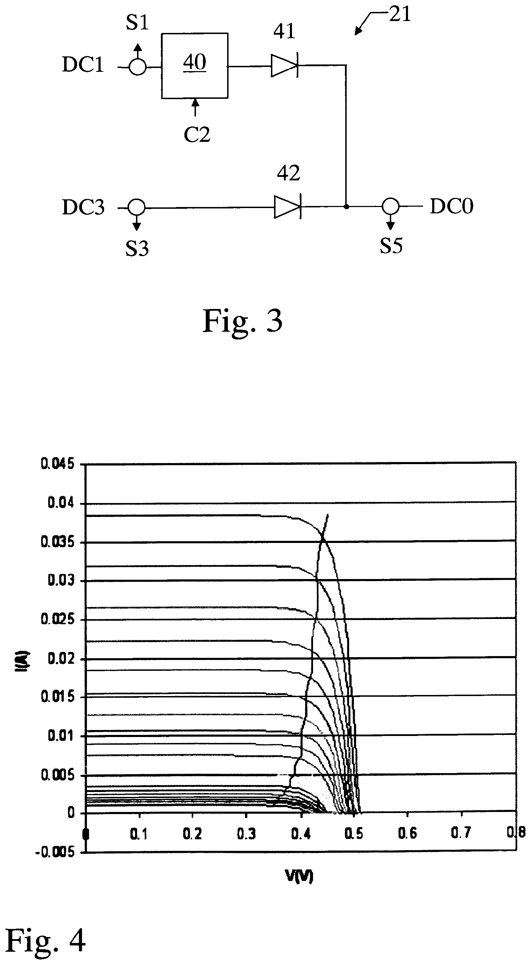

Figure 3 shows a detail of the mixer of Figure 2, in accordance with the present invention;
Figure 4 shows a graph showing the characteristic current/voltage curves of a photovoltaic cell.

With reference to the accompanying figures, a system for supplying electrical energy to a load in accordance with the present invention comprises a first energy source AC1 connected to an alternating current (AC) energy source, for example connected to the electrical mains at 220 VAC; a second energy source AC2 connected to an alternating current energy source, for example connected to the electrical mains at 220 VAC; a third energy source DC3 connected to a direct current (DC) energy source, connected to a system of photovoltaic panels; and a fourth energy source DC4 connected to a direct current energy source, for example connected to a wind generator.

The number of sources usable according to the present invention can vary, but must be at least two, one of an alternating current primary type, for example the 220 VAC mains, and the other of secondary type, a photovoltaic generator.

The term "primary source" means a source which always provides electrical energy, or having a greater priority of use than the secondary sources.

The sources can be of any type, for example even energy storage batteries, the distinction being only in terms of direct current sources and alternating current sources.

In the case of the alternating current sources AC1, AC2, these are connected to a converter 11 converting from alternating current to direct current (AC/DC). The output of the AC/DC converters 11 is connected to a mixer 10.

In the case of the direct current sources DC3, DC4, these are connected directly to the mixer 10.

The output DC0 of the mixer 10 is coupled to an inverter 12; however since a load is to be powered with alternating current, this output is coupled to a change-over switch 13. The change-over switch is also connected to the first energy source AC1. In this case it will be considered that the first energy source AC1 is a primary energy source, i.e. a secure energy source always present, for example the energy provided by an electricity supply company or by an electric generator unit, and that the other sources are secondary solar energy.

The output of the change-over switch 13 is connected to a load 14, which can be for example the domestic electrical installation (alternating) of an apartment.

The mixer 10 comprises a control circuit 20-22 for each of its secondary source inputs DC2-DC4.

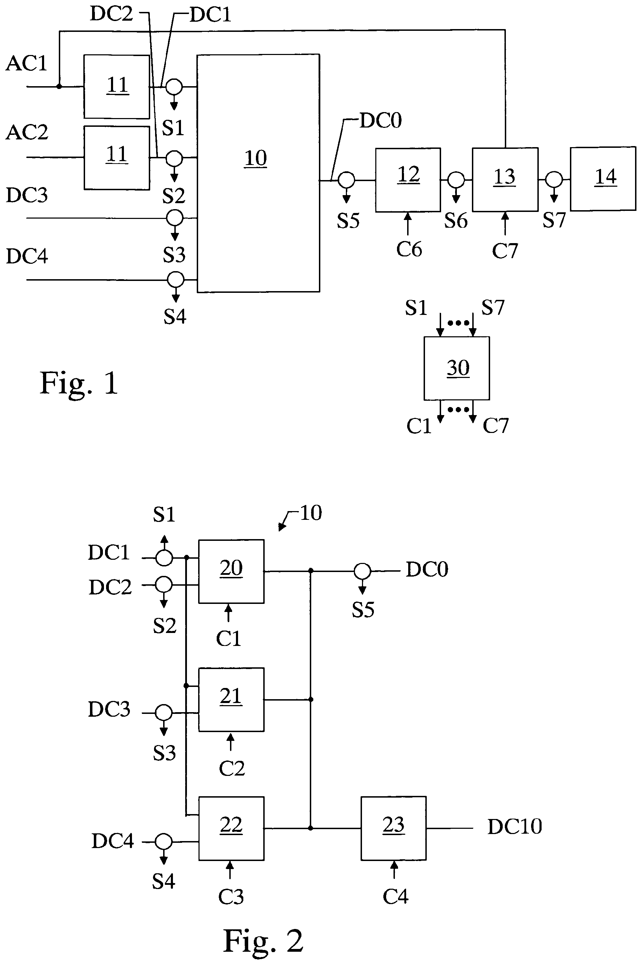

The outputs of the circuits 20-22 are coupled together in parallel as shown in Figure 2. Each circuit 20-22 comprises two inputs, one for entry of the primary energy source DC1, and one for the secondary energy source DC2, DC3, DC4.

The primary input DC1 is connected to a DC/DC converter 40, to the output of which the anode of a diode 41 is connected, the secondary input DC3 being connected directly to the anode of a second diode 42.

The cathodes of the diodes 41 and 42 are connected together to prevent current recirculation between the regulators, and to act as a static switch.

The converter 40 is a converter of the pulse width modulation or PWM type.

Pulse width modulation is widely used to regulate the electrical power fed to a load. With a zero working cycle the power transferred is zero, whereas with a 100% working cycle the power corresponds to the maximum transferred value. Each intermediate value determines a corresponding supply of power.

Each element of the system, and in particular the circuits 20-22, the inverter 12 and the change-over switch 13, is connected to a control circuit 30 which receives from the sensors S1-S7 information on the voltages and currents present along the lines which they control, and sends the control signals for them.

Operation is dependent on the operative conditions of the various sources, which for simplicity can be defined as poor, when the secondary sources are unable to generate energy; insufficient, when the secondary sources generate energy but not at the maximum of their characteristics; and optimum, when the secondary sources generate energy at the maximum of their characteristics.

Assuming for descriptive simplicity that one primary energy source AC1 (for example the electricity mains) and one secondary energy source DC3 (a photovoltaic panel) are present, then the following is valid.

Under poor operating conditions the load 14 is 100% powered by only the primary energy source AC1 via the change-over switch 13.

It should be noted that the primary energy source is alternating and of any frequency, provided the mixing takes place in direct current.

With the secondary source DC3 generating for example 100% of its capacity, the operating conditions are found to be insufficient, and 90% of the energy will be withdrawn from the primary source and 10% from the secondary source. The better the operating conditions the less the energy withdrawn from the primary energy source.

With operating conditions sufficient or optimum, if the secondary source power is able to power 100% of the users, energy absorption from the primary source will be zero.

If the load requires less energy than that generated by the secondary source, the excess can power direct current loads, for example to charge batteries, which can provide energy when the photovoltaic panel is no longer under optimum operating conditions, or it can be used for other purposes.

Initially the load 14 is connected to the primary source, i.e. to the first energy source AC1, via the change-over switch 13.

When the control circuit 30, via the current and voltage sensor S3, considers that the connected secondary source DC3 is able to generate energy, it activates the respective voltage regulator 40 which generates, as output, current and voltage values adequate for powering the inverter 12 and enabling it to operate.

When the inverter 12 operates, the change-over switch 13 switches over and enables the inverter 12 to power the load 14.

Under this operating condition no energy is yet withdrawn from the secondary source, as the regulator 40, connected to the primary source AC1, provides a higher voltage and the diode 42 is inversely polarized.

At this point, the control circuit 30 regulates the pulses of the regulator 40 by means of the command C1, to enable the voltage to decrease, this decreasing as far as the best point of operation of the secondary generator, which is the maximum power which the generator can provide under those environmental conditions in which it is operating at that given moment. The secondary source used is a photovoltaic panel having the characteristics shown in the figure, which shows the characteristic current/voltage curves of a photovoltaic cell subjected to different levels of solar radiation (without taking the temperature into consideration, and which we shall consider constant). The operating characteristic of a panel is similar but with higher quantities. It can be seen that an optimum operating point exists at which all the available power along the substantially vertical curve can be extracted.

To attain the optimum operating point for this secondary source, the control circuit 30 reduces the PWM pulses to the regulator 40 to hence decrease the output voltage.

The output voltage of the regulator 40 attains that of the photovoltaic generator, which begins to dispense current (the diode 42 is now polarized directly), with consequent decrease of its voltage.

The control circuit 30 also receives information from the current and voltage sensor S3, consequently when the voltage of the regulator 40 attains the voltage of the photovoltaic panel DC3, the control circuit 30, via S3, realizes that the photovoltaic panel dispenses energy. The control circuit 30 continues to reduce the PWM pulses until attaining the best operating point for the photovoltaic panel under those environmental conditions in which it is operating at that given moment.

The control circuit 30 continues to maintain and verify the optimum operating point by adapting to the change in power which the photovoltaic panel provides as atmospheric conditions change.

The input energy to the inverter 12 and consequently towards the load 14 is the energy component withdrawn partly from the primary source and partly from the secondary source. The better the environmental conditions the less the energy withdrawn from the primary source.

The task of the regulator 40 , in addition to that already described, is possibly to continuously power users when it is in the condition in which the power provided to the user is less than that which the generator can dispense.

The regulator 40 operates in the following manner: with the load powered by the inverter 12, if the control circuit 30, by sampling the current and voltage sensors S1, realizes that no energy is withdrawn from the primary source (load powered only by the secondary source) and that the operating point of the generator DC3 is no longer the optimum (because of better environmental conditions, reduction in the energy absorbed by the load or because another generator begins to provide energy), the control circuit 30 activates the DC/DC converter 23 and supplies the voltage DC10 to power a load with direct current.

In this manner any excess energy can be used for other purposes.

The system remains in this condition until either the environmental conditions change, and hence the generator DC3 is no longer able to power the users, or the load under the inverter increases, under which condition the continuous users are disconnected and if necessary the microprocessor control circuit restarts the regulator 40 for making up the missing energy.

When the control circuit 30, by sampling the current and voltage sensors S3, considers that the generator DC3 is no longer able to provide energy, it activates the change-over switch 13 to switch the load to the primary source.

When the load 14 is powered by the electricity mains AC1, the inverter 12 and the regulator 40 are switched off.

When the inverter 12 is operating and powers the load 14, the energy supplied is in phase with the mains voltage.

This condition is necessary as the control circuit 30, by sampling the current and voltage sensors S1, considers that the load 14 absorbs more energy than it can deliver (for example in the case of a surge due to a household electrical appliance being switched on) or senses that the mixer 10 is faulty, informing the static switch controller to switch-over the load to mains electricity. The load remains under mains electricity until the termination of the transient event or until the system is repaired.

In this state if the regulator 40 is in operation, the energy produced by the generators is utilized to continuously power the users. If the inverter 12, the regulator 40 or the generator DC3 undergoes a fault, the change-over switch 13 is made to power the load from the mains until repaired.

To integrate multiple sources and/or make the described system modulable, more mixers can be connected.

By virtue of the present system, energy produced by a photovoltaic panel can be mixed with mains energy.

Mixing takes place in direct current. The primary voltage is adapted by the converter 40 to the best working voltage of the secondary source. In this manner, if the secondary source is replaced, the system adapts automatically to the new working voltage.

With the present system, a load can be powered by a photovoltaic panel, and this energy be integrated with energy withdrawn from the mains when the panel delivers too little. Mains energy is used only when photovoltaic energy is lacking (or is too little).

The working voltages and currents of the system described herein can be of the most varied and will depend on the specific conditions of use. The electrical schemes of the circuits described herein will not be further detailed as a technical expert of the art, based on the aforedescribed, is able to implement them.

The system for supplying electrical energy to a load, conceived in this manner, is susceptible to numerous modifications and variants, all falling within the scope of the appended claim 1.

## Claims

1. A system for supplying electrical energy to a load (14) comprising: a first electrical generator (AC1) for alternating current providing an alternating voltage; a voltage converter (11) connected to said first electrical generator (AC1) for converting said alternating voltage of said first generator (AC1) into a first direct current voltage (DC1); a DC to AC voltage converter (12);
a first diode (41) having the cathode connected to the input of said DC to AC voltage converter (12);
a second electrical generator (DC3), being a photovoltaic panel, for direct current providing a second direct current voltage;
a second diode (42) having the cathode connected to the input of said DC to AC voltage converter (12); the cathodes of the diodes (41) and (42) are connected together;
a change-over switch (13) able to switch either the output of said DC to AC voltage converter (12) or said first energy generator (AC1) to a load (14), connected to said DC to AC voltage converter (12), the output of the change-over switch (13) is connected to said load (14), and the change-over switch (13) is also connected to said first electrical generator (AC 1);
a control circuit (30) which receives information from voltage and current sensors (S1S7) and sends commands (C1-C7) to the circuits of said system; said control circuit (30) receives information from a current and voltage sensor (S3) connected to said second electrical generator (DC3);
**characterised in that**
the system further comprises a voltage regulator (40) connected to said voltage converter (11) to provide a regulated direct current voltage; said voltage regulator (40) is a DC/DC converter of PWM type; and **in that**
said first diode (41) has the anode connected to the output of said voltage regulator (40);
said second diode (42) has the anode directly connected to said second electrical generator (DC3);
said control circuit (30) regulates pulses of said voltage regulator (40) by means of a command (C1); and
said control circuit (30) continues to maintain and verify the optimum operating point by adapting to the change in power which said photovoltaic panel provides as atmospheric conditions change.

## Patentansprüche

1. Ein System zur Lieferung von elektrischer Energie an eine Ladung (14), welches Folgendes umfasst: einen ersten Stromgenerator (AC1) für Wechselstrom, der eine Wechselspannung liefert; einen Spannungsumformer (11), welcher an den genannten ersten Stromgenerator (AC1) zur Umformung der genannten Wechselspannung des genannten ersten Generators (AC1) in eine erste Gleichstromspannung (DC1) angeschlossen ist; einen Spannungsumformer von Gleichstrom zu Wechselstrom (12);
eine erste Diode (41), deren Kathode verbunden ist mit der Eingangsleistung des genannten Spannungsumformers von Gleichstrom zu Wechselstrom (12);
einen zweiten Stromgenerator (DC3), welcher ein Photovoltaikpaneel für Gleichstrom ist, das eine zweite Gleichstromspannung liefert;
eine zweite Diode (42), deren Kathode verbunden ist mit der Eingangsleistung des genannten Spannungsumformers von Gleichstrom zu Wechselstrom (12), wobei die Kathoden der Dioden (41) und (42) jeweils miteinander verbunden sind;
einen Umschalter (13), der in der Lage ist, entweder die Ausgangsleistung des genannten Spannungsumformers von Gleichstrom auf Wechselstrom (12), oder den genannten ersten Stromgenerator (AC1) zu einer Ladung (14) zu schalten, die mit dem genannten Spannungsumformer von Gleichstrom auf Wechselstrom (12) verbunden ist, wobei die Ausgangsleistung des Umschalters (13) mit der genannten Ladung (14) verbunden ist und der Umschalter (13) ebenfalls an den genannten ersten Stromgenerator (AC1) angeschlossen ist;
einen Steuerstromkreis (30), welcher Informationen von Spannungs- und Stromsensoren (S1S7) empfängt und Befehle (C1-C7) an die Stromkreise des genannten Systems sendet; wobei der genannte Steuerstromkreis (30) jeweils Informationen von einem Strom- und Spannungssensor (S3) empfängt, welcher an den genannten zweiten Stromgenerator (DC3) angeschlossen ist;
**dadurch gekennzeichnet, dass**
das System desweiteren einen Spannungsregler (40) umfasst, welcher an den genannten Spannungsumformer (11) angeschlossen ist, um eine Gleichstrom-Regelspannung zu liefern; wobei der genannte Spannungsregler (40) ein Gleichstrom-/Gleichstromumformer des PWM Typs ist, sowie dadurch, dass
bei der genannten ersten Diode (41) die Anode jeweils an den Ausgang des genannten Spannungsreglers (40) angeschlossen ist;
bei der genannten zweiten Diode (42) die Anode direkt an den genannten zweiten Stromgenerator (DC3) angeschlossen ist;
der genannte Steuerstromkreis (30) Impulse des genannten Spannungsreglers (40) mit Hilfe eines Befehls (C1) regelt; und
der genannte Steuerstromkreis (30) fortfährt, die jeweils optimale Betriebsstellung beizubehalten und zu überprüfen, indem er sich den Änderungen der Leistung anpasst, welche das genannte Photovoltaikpaneel je nach Wechsel der Witterungsbedingungen liefert.

## Revendications

1. Système pour alimenter une charge (14) en énergie électrique, comprenant : un premier générateur électrique (AC1) pour courant alternatif fournissant une tension alternative ; un convertisseur de tension (11) connecté audit premier générateur électrique (AC1) pour convertir ladite tension alternative du premier générateur (AC1) en une première tension continue (DC1) ; un convertisseur de tension continue-tension alternative (12) ;
une première diode (41) ayant la cathode connectée à l'entrée dudit convertisseur de tension continue-tension alternative (12) ;
un deuxième générateur électrique (DC3), qui est un panneau photovoltaïque, pour courant continu fournissant une deuxième tension continue ;
une deuxième diode (42) ayant la cathode connectée à l'entrée dudit convertisseur de tension continue-tension alternative (12) ; les cathodes des diodes (41) et (42) sont connectées ensemble ;
un commutateur (13) adapté pour commuter soit la sortie dudit convertisseur de tension continue-tension alternative (12) soit ledit premier générateur électrique (AC1) sur une charge (14), connectée audit convertisseur de tension continue-tension alternative (12), la sortie du commutateur (13) est connectée à ladite charge (14), et le commutateur (13) est également connecté audit premier générateur électrique (AC1) ;
un circuit de commande (30) qui reçoit des informations à partir de capteurs de tension et de courant (S1S7) et envoie des commandes (C1-C7) aux circuits dudit système ; ledit circuit de commande (30) reçoit des informations à partir d'un capteur de courant et de tension (S3) connecté audit deuxième générateur électrique (DC3) ;
**caractérisé en ce que**
le système comprend en outre un régulateur de tension (40) connecté audit convertisseur de tension (11) pour fournir une tension continue régulée ; ledit régulateur de tension (40) est un convertisseur continu-continu de type PWM ; et **en ce que**
ladite première diode (41) a l'anode connectée à la sortie dudit régulateur de tension (40) ;
ladite deuxième diode (42) a l'anode connectée directement audit deuxième générateur électrique (DC3) ;
ledit circuit de commande (30) régule des impulsions dudit régulateur de tension (40) au moyen d'une commande (C1) ; et
ledit circuit de commande (30) continue à maintenir et vérifier le point de fonctionnement optimal en s'adaptant à la variation de la puissance que ledit panneau photovoltaïque fournit lorsque des conditions atmosphériques changent.
